# EUROPEAN PATENT APPLICATION

(11) **EP 2 223 865 A1**
(43) Date of publication of application: **01.09.2010**
(21) Application number: 08862876.3
(22) Date of filing: 06.11.2008
(51) Int. Cl.: B65D 73/00, A47F 7/00, B32B 27/32

(54) **DISPLAY STRIP**

(30) Priority: 19.12.2007 JP 2007327309
(71) Applicant: Ishida Co., Ltd., Kyoto-shi Kyoto 606-8392 (JP)
(72) Inventor: IWASAKI, Yoshio, Ritto-shi Shiga 520-3026 (JP); MIZUMOTO, Masako, Ritto-shi Shiga 520-3026 (JP)
(74) Representative: Jones, Helen M.M.
(86) International application number: PCT/JP2008/070193
(87) International publication number: WO 2009/078226

(57) **Abstract**

[Problem to be solved]

To provide a display strip capable of attaching by heat sealing bags comprising a biaxial oriented film and having no low-melting-point layer on the outer surface of the bag.

[Solution]

In the display strip comprising a substrate layer and a sealant layer, problems can be solved by using the display strip **characterized in that** the sealant layer contains an acid-modified olefin resin. In particular, it is more preferable that the sealant layer contains (a) an acid-modified olefin resin, (b) a non-acid-modified olefin resin and (c) an adhesion-imparting agent.

## Description

### TECHNICAL FIELD

The present invention relates to a display strip capable of easily attaching bags by heat sealing, particularly, a display strip capable of attaching by heat sealing even a bag having no low-melting-point polymer layer with adhesion properties on a surface layer of the bag and a product assembly in which such bags are attached to the display strip.

### BACKGROUND ART

In stores such as a super market, convenience store and the like, bags enclosing snack foods and the like are arranged and displayed on a shelf for sale. However, a product assembly in which bags are attached by heat sealing to a strip-shaped display strip as shown in Patent document 1 has been brought to attention as a new selling format from the viewpoint of effectively utilizing a product display space.
Patent document 1: Unexamined Japanese Laid-Open Patent Publication No. 2005-124828

Conventionally, the display strip has been formed by laminating a biaxial oriented film as a substrate layer having mechanical property and a low-melting-point polymer film as a sealant layer having heat-sealing property.
In order to attach bags to the display strip by heat sealing, only fusion of the sealant layer of the display strip was not sufficient, but there was also necessity to form a low-melting-point polymer layer on the surface layer of the bag.
However, in Japan, a vertical seal for forming bags has been provided by a so-called butt seam sealing in which the inner surfaces of a film that forms the bag are joined together and sealed to each other. For this reason, it was not necessary to provide a low-melting-point polymer layer on the surface layer of the bag.
Therefore, in order to attach bags to the display strip for sale, it was required to make bags using a biaxial oriented film and having a low-melting-point polymer layer formed on the surface layer of the bag. Accordingly, there was a problem of lacking versatility because all kinds of commercialized bags could not be attached to the display strip.

### DISCLOSURE OF THE INVENTION

### PROBLEM TO BE SOLVED BY THE INVENTION

The object of the present invention to improve the shortcomings as described above is to provide a display strip capable of attaching by heat sealing bags comprising a biaxial oriented film and having no low-melting-point polymer layer on the outer layer surface of the bag.

The above-mentioned problem can be solved by a display strip for arranging and attaching a plurality of product-enclosed bags for display, which comprises at least a substrate layer and a sealant layer, wherein the sealant layer contains an acid-modified olefin resin.

### MEANS FOR SOLVING THE PROBLEMS

It is preferable that the sealant layer comprises a mixture of a non-acid-modified olefin resin and an acid-modified olefin resin. And, it is preferable that an adhesion-imparting agent is further added to the sealant layer.

The acid-modified olefin resin is preferably a copolymer obtained by copolymerizing polyethylene, polypropylene, a copolymer of ethylene or propylene with other olefins, or an ethylene-vinyl acetate resin with unsaturated carboxylic acid or acid anhydride thereof, or a copolymer modified by graft polymerization of polyethylene, polypropylene, a copolymer of ethylene or propylene with other olefins, or an ethylene-vinyl acetate resin with unsaturated carboxylic acid or acid anhydride thereof. It is further preferably effective that the acid-modified olefin resin is a copolymer of the olefin, unsaturated carboxylic acid or acid anhydride thereof and (meth) acrylic ester, which is obtained by adding (meth) acrylic ester. Furthermore, it is preferable that the non-acid-modified olefin resin is polyethylene, polypropylene, a copolymer of ethylene or propylene with other olefins, or an ethylene-vinyl acetate resin.

It is preferable that the sealant layer is laminated with (a) a non-acid-modified resin layer comprising low-density polyethylene, polypropylene, a copolymer of polypropylene with other olefins, or an ethylene-vinyl acetate resin and (b) a layer containing the acid-modified olefin resin, wherein (b) the layer containing the acid-modified olefin resin is the outermost layer.

It is preferable that the sealant layer comprises at least two layers having (a) a layer comprising a thermoplastic resin including the acid-modified olefin resin, which is the outermost layer and an adhesive layer on its inner surface because the bag once removed can be reattached to the display strip.
In this case, (a) the layer comprising the thermoplastic resin including the acid-modified olefin resin as described above is laminated with a non-acid-modified resin layer comprising low-density polyethylene, polypropylene, a copolymer of polypropylene with other olefins or an ethylene-vinyl acetate resin and a layer containing the acid-modified olefin resin, and the layer containing the acid-modified olefin resin, which is provided so as to be the outermost layer, is included.

Furthermore, according to the present invention, there is provided a product assembly in which product-enclosed bags are attached by heat fusion to the display strip for arranging and attaching a plurality of product-enclosed bags for display, wherein the display strip comprises at least a substrate layer and a sealant layer, wherein the sealant layer contains an acid-modified olefin resin. That is, the product assembly will be sufficient when the product-enclosed bags are attached by heat fusion to the display strip as set forth in claim 1 of this application.

In the product assembly, the outer surface of the bag comprises a biaxial oriented polypropylene film, a biaxial oriented polyester film or a biaxial oriented polyamide film. The bag having no heat sealable layer on the outer surface side thereof as well as the one having a heat sealable layer on the outer surface side thereof can be attached by heat sealing to the display strip of the present invention. Therefore, a pillow packaging bag with a vertical seal formed by a butt seam sealing method can be effectively attached to the display strip.

### EFFECT OF THE INVENTION

According to the present invention, even if the low-melting-point polymer layer is not provided on the substrate layer (biaxial oriented film) of the outer layer of the bag, the sealant layer of the display strip can be securely attached by heat sealing to the substrate layer of the outer layer of the bag. Since products such as snack food and the like are filled in the bag, a load of the bag' s weight is applied to an attached portion of the display strip and the outer layer of the bag. However, the display strip of the present invention can be transferred from a factory as bags are stably held in place and when a purchaser removes the bag from the display strip displayed in a store, the bag can be removed from the display strip without any damage to its appearance.

### BRIEF DESCRIPTION OF THE DRAWINGS

Fig. 1 is a perspective view of a product assembly in which bags are attached to the display strip according to the present invention.
Fig. 2 is a cross-sectional view of a display strip (A type) showing one embodiment according to the present invention.
Fig. 3 is a cross-sectional view of a display strip (B type) showing other embodiment according to the present invention.
Fig. 4 is a perspective view of a pillow packaging bag (with a vertical seal formed by butt seam sealing).
Fig. 5 is a schematic perspective view of a packaging machine.

### DESCRIPTION OF THE REFERENCE NUMERALS

- S: display strip
- 10: A-type display strip
- 11: substrate layer
- 12: sealant layer
- 100: B-type display strip
- 110: substrate layer
- 120: sealant layer
- 121: heat sealable layer
- 122: adhesive layer

### BEST MODE FOR CARRYING OUT THE INVENTION

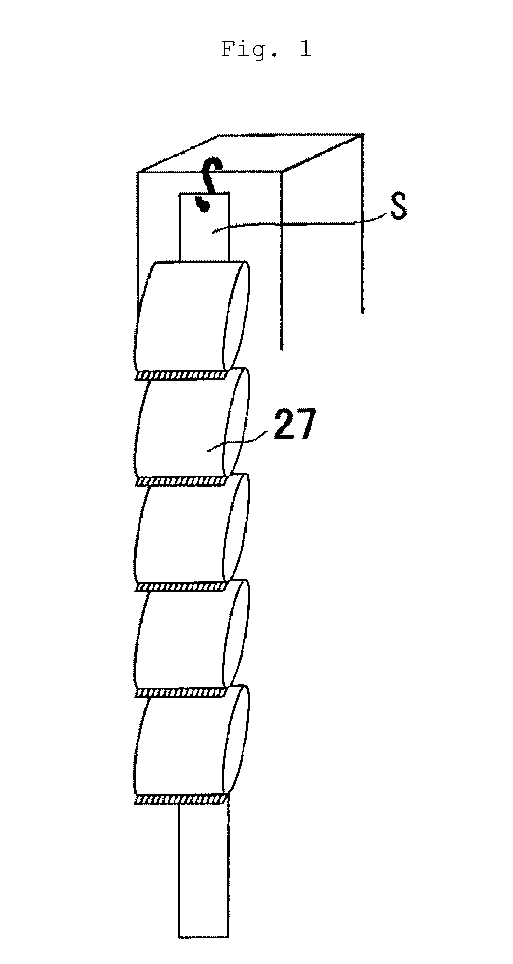

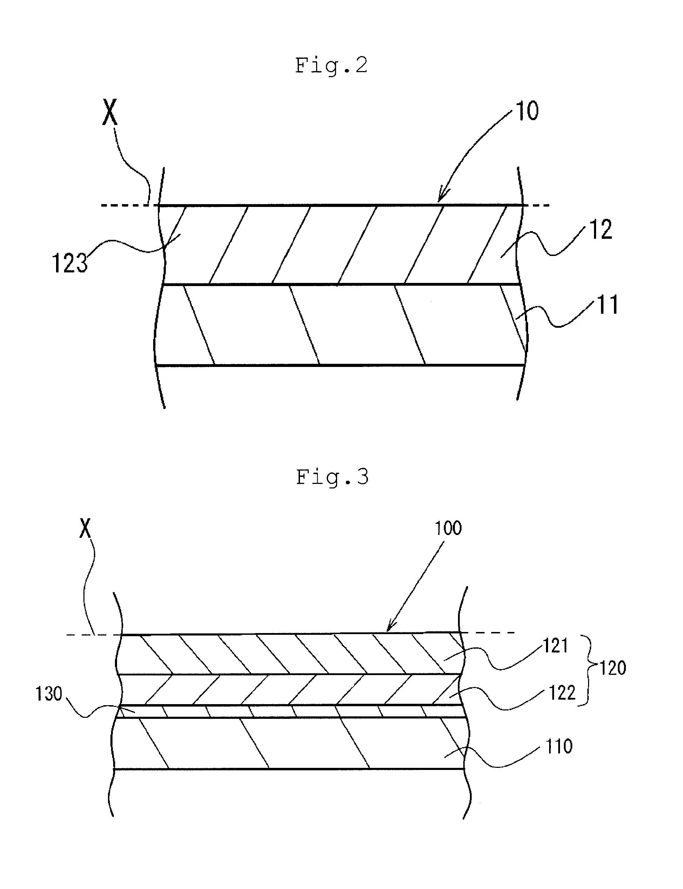

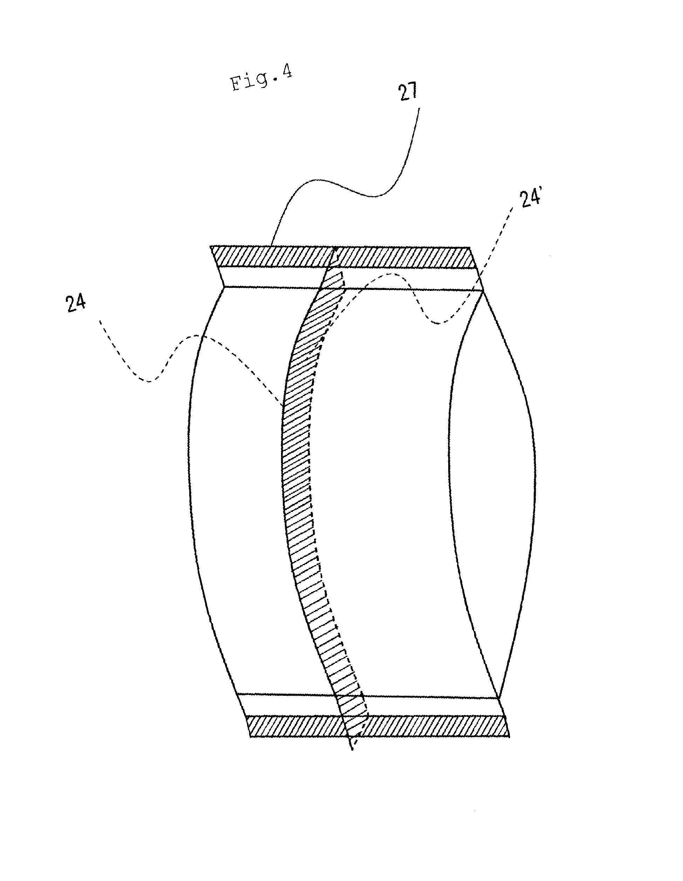

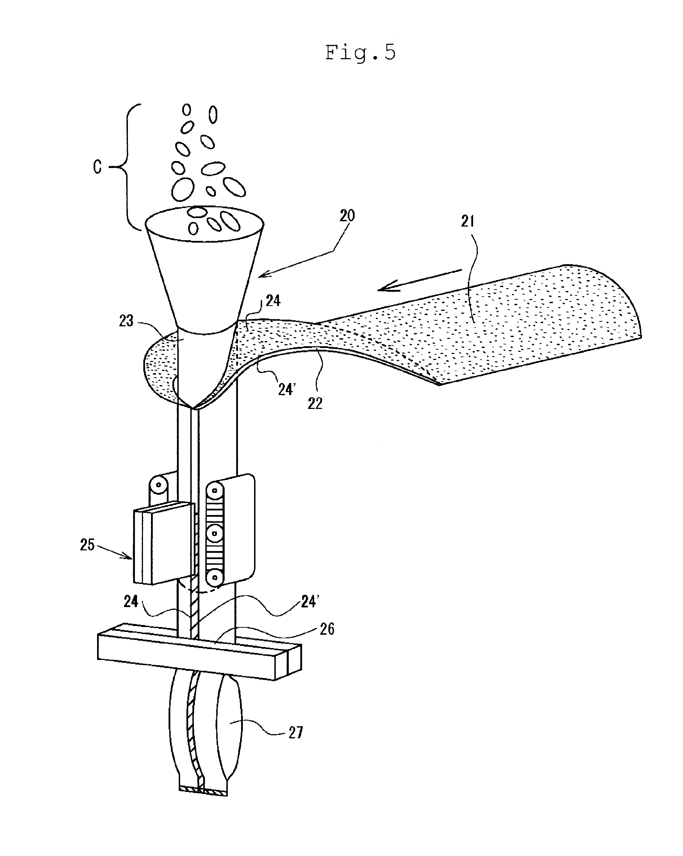

Fig. 1 is a perspective view of a product assembly in which a plurality of bags are attached to the display strip according to the present invention. Fig. 2 is a cross-sectional view of a display strip (A type) showing one embodiment according to the present invention. Fig. 3 is a cross-sectional view of a display strip (B type) showing other embodiment according to the present invention. Fig. 4 is a perspective view of a back side of a pillow packaging bag (with a vertical seal formed by butt seam sealing). Fig. 5 is a schematic perspective view of a packaging machine.

### (Display strip)

The product assembly comprises a plurality of product bags 27 attached to a display strip S of the present invention as shown in Fig. 1.
The display strip S of the present invention has the following two types: A type and B type.
A-type display strip 10 comprises a substrate layer 11 having mechanical property required as the strip and a sealant layer 12 for attaching bags by heat sealing.

B-type display strip 100 comprises a sealant layer 120 having two layers, wherein a heat sealable layer 121 for attaching bags by heat sealing is provided on the outer surface side as described above and an adhesive layer 122 capable of reattaching bags is provided on its inner side so that the bag can be reattached to the display strip when a purchaser wants to return the bag of products after removing it from the display strip. In this case, since when removing the bag from the display strip, the adhesive layer 122 is exposed by peeling off the heat sealable layer together with the bag, the purchaser can reattach the bag to this adhesive layer 122. 110 denotes a substrate layer of the display strip as well as the A type.

### (Substrate layer of display strip)

The substrate layers 11 and 110 of the display strip are preferably designed to have sufficient strength since a number of products are attached thereto and suspended therefrom and also to have heat resistance so as not to fuse or deteriorate during heat sealing. The substrate layers 11 and 110 are not particularly limited in material, but preferred examples of the substrate layers include a biaxial oriented polypropylene film (OPP), a biaxial oriented polyethylene terephthalate film, a biaxial oriented polyamide film, a metal foil, paper, a non-woven cloth, a woven cloth or laminates of these. In particular, each of the above biaxial oriented films or paper is preferable. If these materials do not have sufficient strength, the substrate layer is preferably formed by laminating a woven cloth, a non-woven cloth and the like on these materials. When a woven cloth or a non-woven cloth is laminated thereon, for example, even if a hole punch for suspending is formed in the display strip and the display strip is hooked on through the hole punch, the hole punch strength can be improved, whereby the hole punch portion is hardly damaged. The woven cloth is not particularly limited, but there is preferably used a woven cloth formed by using a flat yarn or split yarn of polyolefin. Furthermore, as the non-woven cloth, there are preferably used a spunbond, a warifu, a flash spun non-woven cloth and the like.

The thickness of the substrate layers 11 and 110 is not particularly limited, but the preferred lower limit is 5 µm and the preferred upper limit is 100 µm. When the thickness is less than 5 µm, the effect of improving the strength may not be sufficiently obtained. When the thickness exceeds 100 µm, the thickness is excessively increased and a problem in which productivity in the heat sealing process is declined by poor thermal conductivity may occur because the heat from a heater is transferred to the sealant layers 12 and 120 through the substrate layer of the bag during heat sealing for attaching bags. For these reasons, the most suitable lower limit is 20 µm and the most suitable upper limit is 50 µm.

### (Sealant layer of display strip)

As described above, there is the sealant layer 12 having heat-sealing property (a heat sealable layer 123) provided in the A-type display strip and the sealant layer 120 comprising the heat sealable layer 121 (on the outer surface) and the adhesive layer 110 (on the inner surface) in the B-type display strip.

### (Heat sealable layer)

The heat sealable layers 123 and 121 are generally comprised of a polymer having a low melting point (whose melting point is not greater than 160°C, preferably not greater than 120°C, further preferably not greater than 100°C) so as to be easily fused. However, in the present invention, the heat sealable layers comprise a low-melting-point polymer further containing an acid-modified polyolefin so as to have adhesion properties to any packaging bags comprising biaxial oriented films such as polypropylene, polyethylene terephthalate, polyamide and the like. The thickness of the heat sealable layers 123 and 121 is not particularly limited, but the preferred lower limit is 3 µm and the preferred upper limit is 100µm. When the thickness is less than 3 µm, sufficient adhesion force can not be obtained. When the thickness exceeds 100 µm, it may take longer time to perform heat sealing. However, it is desirable that the most suitable thickness to obtain sufficient adhesion force and appropriate time to perform heat sealing is not less than 3 µm and not greater than 60µm.

### (Acid-modified olefin resin)

Examples of the acid-modified olefin resin used in the present invention include a copolymer obtained by copolymerizing olefin resins such as polyethylene, polypropylene, a copolymer of ethylene or propylene with other α-olefins, ethylene-vinyl acetate resin or the like, or main chain thereof with unsaturated carboxylic acid or acid anhydride thereof, or a copolymer obtained by graft copolymerizing the above resins or main chain with unsaturated carboxylic acid or acid anhydride thereof.

In the present invention, an example of the polyethylene includes linear low-density polyethylene (including linear low-density polyethylene polymerized with a metallocene catalyst). Examples of the copolymer of ethylene or propylene with other α-olefins include an ethylene-propylene copolymer and a copolymer of ethylene or propylene with α-olefins such as butene-1, pentene-1, 4-methylpentene-1, hexene-1, octene-1, decene-1, dodecene-1 and the like. As the ethylene-vinyl acetate resin, there can be preferably used the one having a vinyl acetate content of 8 to 42 % by weight, but it is not limited to this. As the ethylene-vinyl acetate resin, there can be also used the one obtained by saponifying some of a vinyl acetate component.

In the present invention, preferred examples of the acid anhydride or carboxylic acid to be used for acid modification include unsaturated carboxylic acid anhydride monomers or unsaturated carboxylic acid monomers such as maleic anhydride, itaconic anhydride, himic anhydride, (meth)acrylic acid, fumaric acid, maleic acid, itaconic acid, himic acid, citraconic acid, mesaconic acid, tetrahydrophthalic acid and the like. The acid-modified olefin resin can be obtained by copolymerizing the unsaturated carboxylic acid anhydride monomer or unsaturated carboxylic acid monomer with olefin monomers or polymers such as ethylene, propylene, butene-1, pentene-1, vinyl acetate and the like. It is preferable that the ratio of the unsaturated carboxylic acid anhydride monomer or unsaturated carboxylic acid monomer in the composition to be copolymerized is within the range of 1 to 25 % by weight.

The acid-modified olefin resin can be obtained by graft polymerization of a polymer comprising the above monomers such as ethylene, propylene, butene-1, pentene-1, vinyl acetate and the like or a monomer mixture thereof with the unsaturated carboxylic acid anhydride monomer or unsaturated carboxylic acid monomer. It is desirable that the graft ratio of the unsaturated carboxylic acid anhydride monomer or unsaturated carboxylic acid monomer is generally 0.05 to 15 % by weight. The graft polymerization of the above polymer with the unsaturated carboxylic acid anhydride or unsaturated carboxylic acid can be performed by, for example, using an extruder, fusing the above polymer, adding the unsaturated carboxylic acid anhydride monomer or unsaturated carboxylic acid monomer thereto, preferably further adding a radical initiator, and heating and kneading them.

Furthermore, it is further preferable that copolymerization is carried out by adding a (meth) acrylic ester, that is, acrylic ester or methacrylic ester to them in terms of adhesion properties to the biaxial oriented film. Examples of the (meth) acrylic ester include methyl (meth) acrylate, ethyl (meth)acrylate, propyl (meth)acrylate, butyl (meth)acrylate, pentyl (meth)acrylate, hexyl (meth)acrylate, pentyl (meth)acrylate and the like.

In the present invention, the polymer that forms the heat sealable layers 123 and 121 comprises the acid-modified polyolefin resin, thereby allowing the display strip to have excellent adhesion properties to the outer surface of the bag attached to the display strips 10 and 100, that is, to the biaxial oriented film.

In the present invention, the heat sealable layers 123 and 121 may comprise the acid-modified polyolefin resin alone or a mixture thereof with the non-acid-modified olefin resin. Examples of the non-acid-modified olefin resin include olefin resins such as polyethylene, polypropylene, a copolymer of ethylene or propylene with other α-olefins, an ethylene-vinyl acetate resin or the like as well as the above. An example of the polyethylene includes linear low-density polyethylene (including linear low-density polyethylene polymerized with a metallocene catalyst) and an example of the copolymer of ethylene or propylene with other α-olefins includes the above copolymer as well. The heat sealable layer may have a two-layer structure in which a layer on the surface side where bags are attached comprises the acid-modified olefin resin and a layer on the inner side comprises the non-acid-modified olefin resin, as not illustrated in figures.

Furthermore, with regard to the heat sealable layers 123 and 121, an adhesion-imparting agent is preferably added to the above acid-modified olefin resin and the non-acid-modified olefin resin to be added as required. By adding the adhesion-imparting agent thereto, the adhesion properties to the bag having a surface comprised of a polypropylene biaxial oriented film are improved.

The adhesion-imparting agent is preferably added by 3 to 30 % by weight, preferably 10 to 20 % by weight in the resin of the heat sealable layer.
With respect to the adhesion-imparting agent used in the present invention, although not particularly limited, for example, at least one resin selected from the group consisting of a rosin resin, a terpene resin, an aliphatic hydrocarbon resin, an alicyclic hydrocarbon resin, and an aromatic hydrocarbon resin is preferably used.

With respect to the above-mentioned rosin resin, not particularly limited, examples thereof include rosin, a rosin derivative, a rosin ester, a gum rosin, a wood rosin, a tall oil rosin, a distilled rosin, a hydrogenated rosin, a dimer rosin, a polymerized rosin, a glycerol ester of natural rosin, a glycerol ester of modified rosin, a pentaerythritol ester of natural rosin, a pentaerythritol ester of modified rosin, a glycerol ester of hypochromic wood rosin, a glycerol ester of hydrogenated rosin, a glycerol ester of polymerized rosin, a pentaerythritol ester of hydrogenated rosin, a phenolic modified pentaerythritol ester of rosin and the like.

With respect to the above-mentioned terpene resin, not particularly limited, examples thereof include a terpene, a phenolic terpene, a modified terpene, an α-pinene polymer, a dipentene polymer, a terpene-phenol copolymer and the like.

With respect to the above-mentioned aliphatic hydrocarbon resin, not particularly limited, examples thereof include polymers mainly composed of monoolefin or diolefin having 4 to 5 carbon atoms, such as 1-butene, isobutylene, butadiene, 1,3-pentadiene, and the like.

With respect to the above-mentioned alicyclic hydrocarbon resin, not particularly limited, examples thereof include a resin obtained by polymerizing a material that is formed by subjecting a diene component in a spent C4-C5 distilled portion to a ring-forming process to be formed into a dimer, a resin obtained by polymerizing a cyclic monomer such as cyclopentadiene and the like, a hydrogenated dicyclopentadiene resin, a hydrogenated petroleum resin, and the like.

With respect to the above-mentioned aromatic hydrocarbon resin, not particularly limited, examples thereof include vinyl toluene, indene, a styrene polymer, an α-methylstyrene copolymer and the like.

The above-mentioned heat sealable layer is applied to the heat sealable layers 123 and 121 of the A-type display strip 10 and the B-type display strip 100, respectively. In the B-type display strip 100, when the bag is removed from the display strip 100, peeling is caused in the interface between the heat sealable layer 121 and the following adhesive layer 122, and the heat sealable layer 121 of the display strip 100 is adhered to the bag side and then peeled off. In the case of the A-type display strip 10, it is preferable that peeling is caused in the interface X between the bag and the display strip or that the sealant layer 12 of the display strip 10 has easy peelability so as to remove the bag from the display strip 10 without damaging the surface of the bag when removing the bag.

In order to peel at the interface X or to have easy peelability, it is preferable that a cohesive failure component (such as styrene polymer or the like) is added to a polymer composition that forms the heat sealable layer 123, or that a mixture of polyethylene and polypropylene, or an ethylene-vinyl acetate resin is used as a base polymer of the polymer composition. Furthermore, the heat sealable layer 123 may be prepared to have a two-layer structure in which the upper layer is provided as a heat sealable layer and the lower layer is comprised of the polymer composition having easy peelability, because when removing the bag from the display strip, the upper layer is attached to the bag and peeled off without any damage on the outer surface of the bag.

### (Adhesive layer)

As described above, the sealant layer 120 of the B-type display strip 100 is comprised of the heat sealable layer 121 that is the upper layer and the adhesive layer 122 provided on the inner surface side thereof. The adhesive layer 122 is not particularly limited as long as it has adhesion properties at a room temperature, but there can be preferably used a rubber adhesive agent, an acrylic adhesive agent and the like for forming the adhesive layer 122. The thickness of the adhesive layer 122 is not particularly limited, but the preferred lower limit is 10 µm and the preferred upper limit is 300 µm. When the thickness is less than 10 µm, in removing the bag once attached from the display strip, the above-mentioned adhesive layer 122 is also peeled off together with the above-mentioned heat sealable layer 121, whereby it might become difficult to reattach the bag to the display strip. On the other hand, even when the thickness of the adhesive layer 122 exceeds 300 µm, effect caused by the adhesive layer 122 is not improved. In particular, more preferred lower limit is 20 µm and more preferred upper limit is 100 µm.

### (Silicone treatment)

In the B-type display strip 100, it is preferable that there is a silicone treating agent layer 130 provided between the heat sealable layer 121 of the upper layer and the adhesive layer 122 of the lower layer so that when the bag is removed, peeling can be easily caused between the heat sealable layer 121 of the upper layer and the adhesive layer 122 of the lower layer. The silicone treating agent is not particularly limited and for example, a commercially available silicone treating agent used for the uses which require releasability or the like is coated on the lower surface of the adhesive layer 122 of the above-mentioned sealant layer 120, thereby conducting silicone treatment.

### (Production of display strip)

As described above, the display strip comprises a substrate layer and a sealant layer (A type: a heat sealable layer, B type: a heat sealable layer and an adhesive layer), but the lamination is preferably carried out as follows.

In the A-type display strip, the lamination is carried out by a method of laminating a substrate layer film and a sealant layer film comprising a low-melting-point polymer while extruding a polyethylene or a method of laminating the substrate layer film and the sealant layer film through an adhesive agent. When the substrate layer comprises not only a biaxial oriented film or paper, but also a woven cloth or non-woven cloth, the woven cloth/non-woven cloth is laminated on the biaxial oriented film or paper through an adhesive agent or an extruded polyethylene, followed by laminating the sealant layer film thereon.

In the B-type display strip, the adhesive layer is provided on a substrate layer film and a heat sealable layer film is laminated on this, thereby forming the display strip. For forming the adhesive layer on the substrate layer film, it is preferable that the surface of the substrate layer film is treated by using a primer such as a polyurethane primer or the like, thereby providing a primer treated layer and on top of this, the adhesive layer is provided by coating and drying an adhesive agent because good adhesion between the substrate layer and the adhesive layer can be obtained. In laminating the heat sealable film on the adhesive layer, one surface of the heat sealable layer film is subjected to silicone treatment so as to ensure to peel off the heat sealable layer when removing the bag from the display strip, and the silicone treated surface and the adhesive layer surface are laminated, thereby enabling to form the B-type display strip. It is preferable that weakness lines are formed at desired intervals in the heat sealable layer so that the heat sealable layer can be easily peeled off.

In the present invention, the sealant layer (the heat sealable layer, adhesive layer) may be formed on all over the surface of the display strip or may be partly formed in a striped pattern. If bags can be attached to a site in which the sealant layer is partly formed, the same function can be fulfilled. Furthermore, in the present invention, the heat sealable layer may be formed by not only film lamination but also by coating solution or dispersion thereto. When the heat sealable layer comprises two or more layers, for example, the heat sealable layer may be formed by coating the acid-modified olefin resin layer to the thermoplastic resin film that is not acid modified.

### (Packaging bags)

The packaging bag to be attached to the display strip comprises a laminated film and basically have a substrate layer having strength properties, a barrier layer having barrier properties to oxygen and water vapor, and a sealant layer (a heat sealable layer) for forming the bag from the film by heat sealing.

As the substrate layer of the laminated film that forms the bag, biaxial oriented films such as polypropylene (OPP), polyester, polyamide and the like can be used. In the present invention, the outer surface of the bag comprises a biaxial oriented film and even if there is no heat sealable layer having a low melting point on the surface layer of the bag, the bag can be attached to the display strip. However, the bag may have the heat sealable layer. As the sealant layer of the laminated film, films having a low-melting-point polymer layer, such as polyethylene, a copolymer of propylene with other α olefins (such as ethylene, butene-1, pentene-1, 4-methylpentene-1, hexene-1, octene-1, decene-1, dodecene-1 and the like), cast polypropylene (CPP), heat-sealable biaxial oriented polypropylene (OPH) and the like, can be used. Examples of the barrier layer include vapor-deposited layers of aluminium, silicon oxide, aluminum oxide and the like, and the barrier layer is formed by vapor deposition on the substrate layer film or the sealant film. As the barrier layer, a copolymer resin layer of ethylene-vinyl acetate, a polymer layer of metal unsaturated carboxylate (such as a polymer of calcium acrylate etc.) may be formed on the biaxial oriented polymer layer or the sealant layer.

A laminated film for bag can be obtained by laminating the above-mentioned substrate layer film and the sealant film through an extruded polyethylene or an adhesive agent. It is preferable that a vapor-deposited layer or other barrier layer is formed either on the substrate layer film or the sealant film as described above. In laminating, it is preferable that anchor coat is coated with an adhesive agent to be laminated in order to improve adhesion between respective layers. With this, when the bag is removed from the display strip, peeling occurs between the layers of the bag, whereby there is no possibility of impairing the appearance of the bag because a print layer is moved to the display strip side.

It is preferable that the thickness of the bag as a whole is 40 to 300 µm, the thickness of the substrate layer is 10 to 100 µm and the thickness of the sealant layer is 10 to 100µm. When the thickness of the substrate layer is thin, required strength can not be obtained. When the thickness is too thick, it is difficult that heat from a seal jaw is conducted through the substrate layer to the sealant layer during heat sealing. When the sealant layer is too thin, sufficient heat-seal strength can not be obtained and when the sealant layer is too thick, sealing effect is not affected and it is uneconomical because more materials are required.

The bag is produced from the above-mentioned laminated film while filling products thereto, wherein the sealant layer is set on the inner surface of the bag and the substrate layer is set on the outer surface thereof. It is noted that the bag generally has a print layer formed on the surface of the substrate layer in order to attract consumer's attention.
For example, typical layer structures of the bag are exemplified as follows. The outer layer is a biaxial oriented polypropylene layer or a transparent vapor-deposited biaxial oriented polyethylene terephthalate layer as follows on the left side.
biaxial oriented polypropylene layer / print layer / polyethylene layer / aluminum vapor-deposited polyethylene terephthalate layer / polyethylene layer / cast polypropylene layer,
biaxial oriented polypropylene layer / print layer / polyethylene layer / aluminum vapor-deposited cast polypropylene layer,
transparent vapor-deposited biaxial oriented polyethylene terephthalate layer/ print layer / adhesive layer / cast polypropylene layer.

The above-mentioned laminated film is supplied to a bag-making packaging machine and the bag is produced by an ordinary method while filling products such as foods and the like. As the bag-making packaging machine, it is not particularly limited, but a pillow packaging machine is generally used. As a typical example, as shown in Fig. 5, the laminated film 21 is supplied to a vertical pillow packaging machine 20 and while the laminated film 21 is formed into a cylindrical shape in the process of moving from a shoulder part 22 to a former part 23 of the packaging machine, inner surfaces 24 and 24' at both ends in the film longitudinal direction are joined and vertically sealed (butt seam sealing) by a vertical sealing machine 25, followed by forming horizontal seals at predetermined intervals by a horizontal sealing machine 26 and then being cut and a bag 27 is obtained.
In this embodiment, as shown in Figs. 4 and 5, since a vertical seal is formed by joining together the inner surfaces 24 and 24' of the laminated film 21, the bag can be formed even if the low-melting-point layer is not formed on the outer surface layer of the bag. If the laminated film comprises a low-melting-point layer formed on the biaxial oriented polymer layer, in joining the both ends in a longitudinal direction of the laminated film to be vertically sealed, the bag can be produced by envelope seam sealing in which one inner surface and the other outer surface are joined together. C represents products.

### (Attachment of packaging bags to display strip)

The bag filled with products are discharged from the bag-making packaging machine, held by an arm of an applicator (such as an attaching machine) displaced below, moved to the heater surface of a heat sealing machine and then the bag can be attached by heat sealing to the supplied display strip. In the present invention, since the sealant layers 12 and 120 of the display strips 10 and 100 comprise the acid-modified polyolefin resin, the bag can be attached to the display strip even if the low-melting-point polymer layer is not formed on the outer surface of the bag. Therefore, such a bag produced by butt seam sealing, which has no low-melting-point polymer layer formed thereon, can be attached to the display strip.

### EXAMPLE

### 1.Production of display strip

A biaxial oriented PET film (having a thickness of 50 µm) is used for the substrate layer and is subjected to corona discharge treatment, followed by anchor coat treatment. The above-mentioned film surface is coated with a natural rubber-based adhesive agent so as to have a thickness of 30 µm.
Aside from this, as the heat sealable layer, three types of resins A, B and C as follows (mixing ratio : 60 parts by weight, B of 20 parts by weight, C of 20 parts by weight) are dry blended, supplied to a biaxial extruder, fused and kneaded with the extruder, thereby forming a film having a thickness of 30 µm. One surface of this film is subjected to corona discharge treatment, and a UV-curable silicone release agent is coated on the treated surface in a coating amount of 0.5 g/m². After that, the coated surface is dried.
Resin A: ethylene copolymer resin [REXPEARL (registered trademark) ET-330H produced by Japan Polyethylene Corporation] (olefin resin containing an acid anhydride group) (acid-modified olefin resin)
Resin B: ethylene-vinyl acetate copolymer resin [trade name Mercen MX106, produced by Tosoh Corporation]
Resin C: hot-melt resin containing ethylene-vinyl acetate copolymer resin [series number 7573T, produced by Yasuhara Chemical Co., Ltd.]
The surface of the adhesive layer on the PET film and the surface of the heat sealable layer which is coated with the release agent are laminated, thereby forming a laminated film comprising the substrate layer, the adhesive layer and the heat sealable layer. This laminated film is slit into a width of 35 mm and then, weakness lines are formed at intervals of 3 mm in the longitudinal direction only in the heat sealable layer, thereby forming the B-type display strip.

### 2. Attachment of bags to display strip

The laminated film having a structure of biaxial oriented polyester film (O-PET) having 12 µm / print layer / adhesive layer / aluminum vapor-deposited biaxial oriented polyester film (O-PET) having 12 µm / linear low-density polyethylene (LLDPE) having 40 µm is supplied to a vertical pillow packaging machine, thereby producing a pachaging bag (having a size: 17 cm width × 24 cm length) which is filled with 100 g of potato chips. By using F-SPA manufactured by ISHIDA CO., LTD., six of these bags are attached to the display strip at intervals of 80 mm. Heat sealing for attaching the bag to the display strip is performed under the condition at a temperature of 140°C and a pressure of 40 Kg.

### 3. Evaluation of adhesion force

With regard to the display strip with bags attached thereto, the adhesion force between the bag and the display strip was measured at a tension rate of 300 mm/min using Strograph VI-C (manufactured by Toyo Seiki Seisaku-Sho, Ltd.). The adhesion strength was 15.6 N.

### (Comparative Example 1)

The display strip is obtained in the same manner as in Example 1 except a film is formed by using only the resin B, not using the resins A and C for forming the heat sealable layer of the display strip. Bags are attached to the obtained display strip in the same manner as in Example 1. However, even if the heat sealable layer of the display strip is heat fused, the bags are not adhered to the display strip.

### (Comparative Example 2)

The display strip is obtained in the same manner as in Example 1 except cast polypropylene film (CPP) is used as the film that forms the heat sealable layer, not using the resins A, B and C for forming the heat sealable layer of the display strip. Bags are attached by heat sealing to the obtained display strip in the same manner. However, even if the heat sealable layer of the display strip is heat fused, the bags are not adhered to the display strip.

### INDUSTRIAL APPLICABILITY

The present invention relates to a display strip capable of easily attaching bags by heat sealing, in particular, a display strip capable of attaching by heat sealing even a bag having no low-melting-polymer layer with adhesion properties on the surface layer of the bag.
Therefore, the display strip of the present invention can be preferably used as a product assembly in which such bags are attached to the display strip.

## Claims

1. A display strip for arranging and attaching a plurality of product-enclosed bags for display, which comprises at least a substrate layer and a sealant layer,
wherein the sealant layer comprises a thermoplastic resin including an acid-modified olefin resin.

2. The display strip as set forth in claim 1, wherein the sealant layer comprises a mixture of a non-acid-modified olefin resin and the acid-modified olefin resin.

3. The display strip as set forth in claim 2, wherein an adhesion-imparting agent is further added to the sealant layer.

4. The display strip as set forth in claim 1 or 2, wherein the acid-modified olefin resin is a copolymer obtained by copolymerizing polyethylene, polypropylene, a copolymer of ethylene or propylene with other α-olefins, or an ethylene-vinyl acetate resin with unsaturated carboxylic acid or acid anhydride thereof, or
a copolymer modified by graft polymerization of polyethylene, polypropylene, a copolymer of ethylene or propylene with other α-olefins, or an ethylene-vinyl acetate resin with unsaturated carboxylic acid or acid anhydride thereof.

5. The display strip as set forth in claim 4, wherein the acid-modified olefin resin is a polymer obtained by further copolymerizing (meth)acrylic ester.

6. The display strip as set forth in claim 2, wherein the non-acid-modified olefin resin is polyethylene, polypropylene, a copolymer of ethylene or propylene with other α-olefins, or an ethylene-vinyl acetate resin.

7. The display strip as set forth in claim 1, wherein the sealant layer is laminated with
(a) a non-acid-modified resin layer comprising low-density polyethylene, polypropylene, a copolymer of polypropylene with other olefins, or an ethylene-vinyl acetate resin and
(b) a layer containing the acid-modified olefin resin, wherein (c) the layer containing the acid-modified olefin resin is the outermost layer.

8. The display strip as set forth in claim 1, wherein the sealant layer comprises at least two layers having
(a) a layer comprising the thermoplastic resin including the acid-modified olefin resin, which is the outermost layer and
(b) an adhesive layer on its inner surface.

9. The display strip as set forth in claim 8, wherein the layer comprising the thermoplastic resin including the acid-modified olefin resin is laminated with
a layer containing the acid-modified resin and
a non-acid-modified resin layer comprising low-density polyethylene, polypropylene, a copolymer of polypropylene with other olefins, or an ethylene-vinyl acetate resin,
wherein the layer containing the acid-modified resin is the outermost layer.

10. A product assembly in which product-enclosed bags are attached by heat fusing to the display strip as set forth in claim 1.

11. The product assembly as set forth in claim 10, wherein the outer surface of the bag comprises a biaxial oriented polypropylene film, a biaxial oriented polyester film or a biaxial oriented polyamide film.

12. The product assembly as set forth in claim 10, wherein the outer surface of the bag comprises a biaxial oriented film, wherein the bag has no heat sealable layer on the outer surface side.

13. The product assembly as set forth in claim 10, wherein the bag is a pillow packaging bag with a vertical seal formed by butt seam sealing.
